# EUROPEAN PATENT APPLICATION

(11) **EP 1 571 832 A1**
(43) Date of publication of application: **07.09.2005**
(21) Application number: 05100643.5
(22) Date of filing: 31.01.2005
(51) Int. Cl.: H04N 5/225, H04N 5/232, G03B 13/02

(54) **Image capturing apparatus with an extendable viewfinder**

(30) Priority: 28.02.2004 KR 2004013799
(71) Applicant: SAMSUNG ELECTRONICS CO., LTD., Gyeonggi-do 442-742 (KR)
(72) Inventor: OH, Seo-young, Gyeongsangbuk-do (KR)
(74) Representative: Geary, Stuart Lloyd

(57) **Abstract**

A viewfinder has a liquid crystal display device, a lens, an outer case, and an inner case. The outer case guides movement of the inner case having the lens. The outer case has a guide wall and first and second fixing grooves abutting both ends of the guide wall. The inner case has a fixing protrusion. Moving the inner case moves the fixing protrusion in close contact to the inside of the guide wall and inserts the fixing protrusion in the first or second fixing groove such that the inner case is fixed at the inserted position or the protruded position.

## Description

The present invention relates to an image capturing apparatus including a body and a viewfinder comprising first and second longitudinally, relatively moveable elements, one within the other.

As is well-known, an image capturing apparatus, such as a camcorder, records an image of a subject on a recording medium, such as a magnetic tape, and reproduces the recorded image. Such image capturing apparatuses typically include an electronic viewfinder (EVF) so that the user can control the scene being captured.

Generally, a viewfinder includes a liquid crystal display for displaying the image being recorded or reproduced and a lens for enabling a user to observe an image, displayed by the liquid crystal display, conveniently. The viewfinder is generally configured to protrude from the main body of the image capturing apparatus for convenience of use. However, as liquid crystal monitors are now being used in image capturing apparatuses, the frequency of use of the viewfinder is reduced and, therefore, the structure of a viewfinder protruding from an image capturing apparatus main body is a problem to be avoided.

In view of the above, the KR-U-2000-0016781 discloses a viewfinder whose length is adjustable. This viewfinder includes an inner case having a liquid crystal display device and an outer case having a lens device. The inner case is fixed on the image capturing apparatus's main body and the outer case is slidably mounted with respect to the inner case. Accordingly, when the viewfinder is not in use, the outer case is pushed into a main body to locate the viewfinder in an retracted position and, when the viewfinder is in use, the outer case is drawn from the main body to locate the viewfinder in a protruding position. The inner case includes two springs to hold the outer case in its retracted and protruding positions. The two springs are plate springs and are securely attached to the inner case by screws.

The disclosed viewfinder requires separate springs for holding the outer case at its retracted and protruding positions and the springs have to be attached to the inner case. Therefore, the structure is complicated and assembling, processing and manufacturing costs are undesirably high. Furthermore, the outer case may be damaged by friction between it and the springs.

Therefore, a need exists for a length-adjustable viewfinder that is less complicated and does not damage the viewfinder or the housing therefor.

An image capturing apparatus, according to the present invention, is characterised in that outer of said elements is fixed to said body.

Preferably, the inner of said elements has a projection and the outer of said elements has first and second holes, e.g. slots, separated longitudinally and configured to receive the projection to thereby define retracted and extended positions of the inner of said elements. More preferably, said projection and/or a wall portion of the outer of said elements between said holes are elastically deflectable. Still more preferably, the projection is configured such that itself and/or said wall portion are deflected when a longitudinal force is applied for moving the inner of said members between said retracted and extended positions.

Preferably, the inner of said elements has a protrusion and the outer of said elements has a slot, which may connect the tops or bottoms of said holes, receiving said protrusion, the slot and the protrusion being dimensioned to prevent relative movement between said elements beyond their retracted and extended configurations. More preferably, the protrusion is elastically deflectable for insertion of the inner of said elements into the outer but configured to prevent such deflection when it reaches the extended position end of said slot during extension of the viewfinder.

Additional preferred and optional features are set forth in claims 7 to 22 appended hereto.

An embodiment of the present invention will now be described, by way of example, with reference to the accompanying drawings, in which:-
Figure 1 is a perspective view of an image capturing apparatus according the present invention;

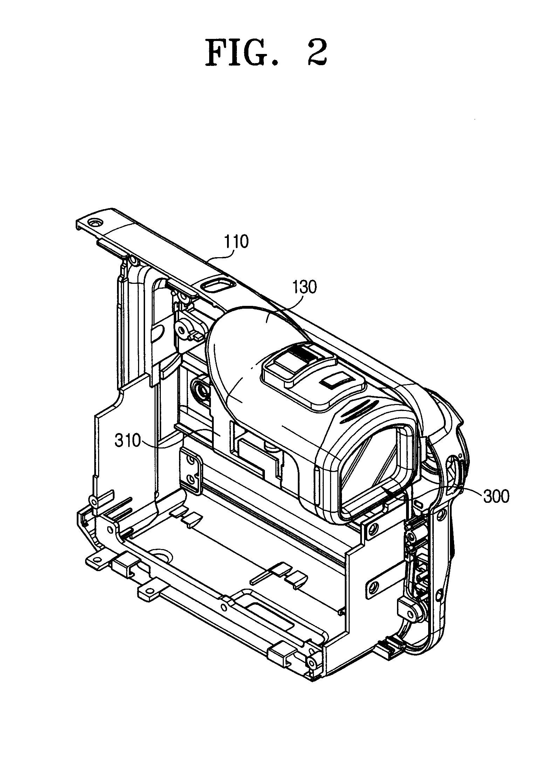

Figure 2 is a perspective cut-away view of the image capturing apparatus of Figure 1;
Figure 3 is an exploded perspective view of the viewfinder of the image capturing apparatus of Figure 1;
Figure 4 is a perspective view of the viewfinder of Figure 3 in its assembled state; and
Figures 5A and 5B are side views of the operation of the viewfinder of Figure 3.

Well-known functions and structures will not be described in detail since this may obscure the invention with unnecessary detail.

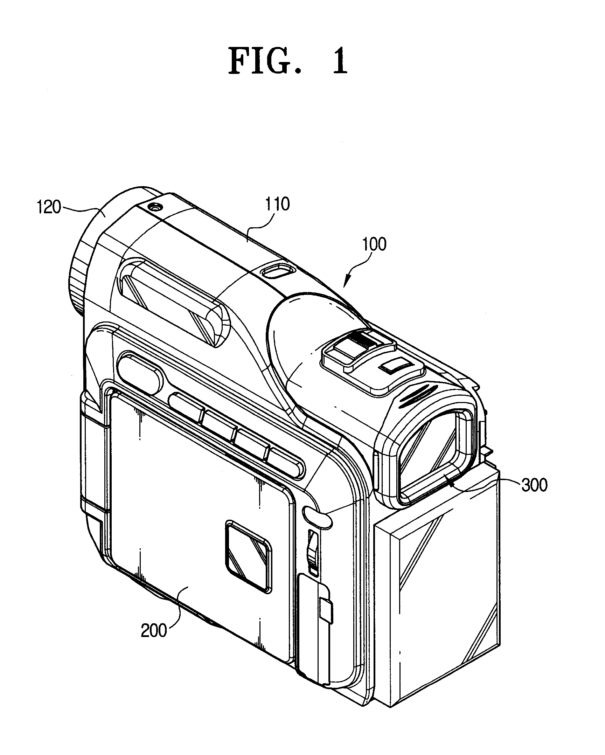

Referring to Figure 1, an image capturing apparatus according to the present invention mainly comprises a main body 100, a liquid crystal display LCD monitor 200 and a viewfinder 300.

The image capturing apparatus main body 100 includes a housing 110, defining the external form of the apparatus, a camera unit (not shown), a deck unit (not shown), and a control unit (not shown). The camera unit, deck unit and control unit are mounted in the housing 110. The camera unit captures images and converts the images to image signals. The camera unit includes a camera lens 120, mounted so as to be exposed at one side of the housing 110. The deck unit includes a recording media receiving part for receiving a recording medium, such as a magnetic tape or a flash memory. A signal reproducing and recording device, such as a head drum, that records image signals and reproduces recorded image signals on a recording medium. The control device controls the overall operation of the image capturing apparatus.

The liquid crystal display LCD monitor 200 displays a images being captured or reproduced and is mounted to one side of the image capturing apparatus's main body 100.

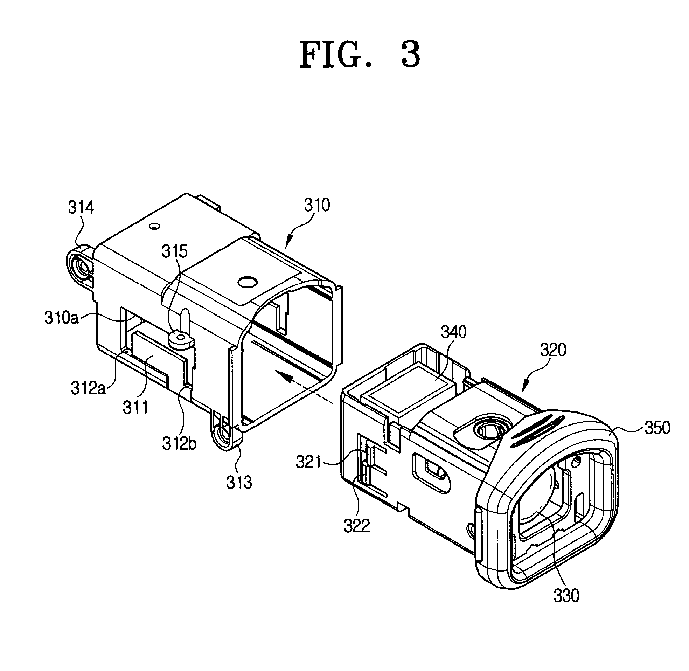

Like the liquid crystal display LCD monitor 200, the viewfinder 300 also displays a images being captured or reproduced and is length-adjustably mounted to the image capturing apparatus's main body 100. The viewfinder 300 includes an outer case 310, an inner case 320, a lens 330 and a liquid crystal display device 340, as shown in Figure 3.

Referring to Figure 3, the outer case 310 guides the movement of the inner case 320 and is mounted in the image capturing apparatus's main body 100. Each of the left and right sides of the outer case 310 has a guide wall 311, a guide slot 310a and first and second fixing slots 312a, 312b. The first and second fixing slots 312a, 312b are at opposite ends of the guide wall 311 such that the guide wall 311 is located between the first fixing slots 312a and the second fixing slot 312b, as shown in Figure 3. The guide slot 310a extends in the longitudinal direction of the sides of the outer case 310 and is preferably approximately the same size as the length between the first fixing groove 312a and the second fixing groove 312b, as shown in Figure 3. The outer surface of the outer case 310 has a plurality of boss parts 313, 314, 315 adapted to receive fasteners to secure the outer case 310 to the housing 110. The upper side of the outer case 310 covered by the housing 110 so that it is not visible. Preferably, the outer case 310 is integrally formed with the guide wall 311 and boss parts 313, 314, 315 by molding, to minimise processing and manufacturing costs.

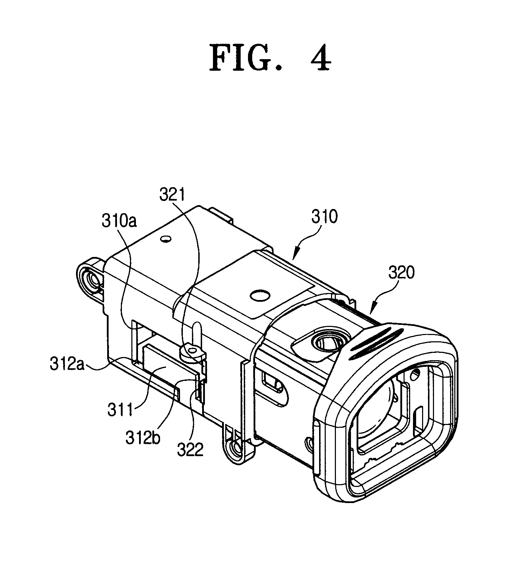

The inner case 320 is movably mounted within the inside of the outer case 310. A hook 321 and a fixing protrusion 322 are mounted on each side of the inner case 320. The hook 321 is inserted in the guide groove 310a of the outer case 310 when the inner case 320 is fitted in the outer case 310, as shown in Figure 4. The hook 321 is moved along the guide groove 310a when the inner case 320 is moved. The fixing protrusion 322 is inserted in the first fixing groove 312a or the second fixing groove 312b of the outer case 310 when the inner case 320 is fitted in the outer case 310. The fixing protrusion 322 has a rounded surface to easily separate from the first fixing groove 312a or the second fixing groove 312b. When the inner case 320 is moved by guide of the outer case 310, the fixing protrusion 322 is moved from the first fixing groove 312a to the second fixing groove 312b, or from the second fixing groove 312b to the first fixing groove 312a, in close contact to the inside of the guide wall 311. In the inner case 320, the hook 321 and the fixing protrusion 322 are preferably integrally formed by molding. The inner case 320 is made of the same material as the outer case 310.

The inner case 320 has a liquid crystal display device 340 for displaying images being captured or reproduced. A lens 330 enlarges the image displayed on the liquid crystal display device 340 for viewing by a user. The liquid crystal display device 340 is electronically connected with the image capturing apparatus main body 100 through a connecting member, such as a flexible printed circuit (FPC). The lens 330 is attached in a conventional manner to the inside of the inner case 320 for movement therewith. An eyecup 350 is fitted over the outer end of the inner case 320.

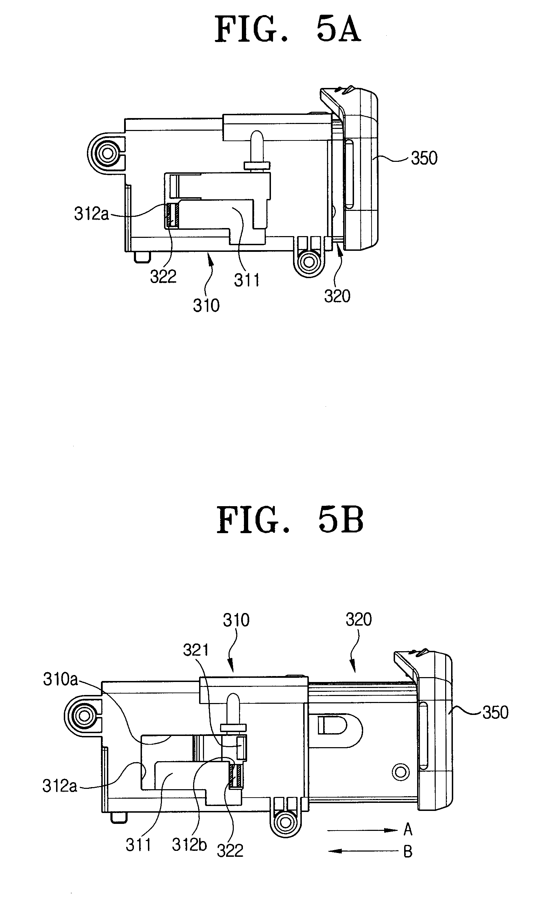

Figure 5A shows the viewfinder in its retracted position.

Referring to Figure 5A, the fixing protrusion 322 of the inner case 320 is received in the first fixing slot 312A in the outer case 310. In this state, the fixing protrusion 322 is in contact with one end of the guide wall 311 such that the inner case 320 may not be easily moved in the longitudinal direction indicated by arrow A (refer to Figure 5B).

To use the viewfinder 300, the eyecup 350 and the inner case 320 are withdrawn from the outer case 310. As shown in Figure 5B, as the inner case 320 is subjected to a force in the longitudinal direction, indicated by arrow A, to move the viewfinder to its protruding position, the fixing protrusion 322, initially received in the first fixing slot 312a, is separated from one end of the guide wall 311 and is moved in contact with the inside of the guide wall 311 until it is received in the second fixing slot 312b. When the hook 321 in the guide slot 310a is in contact with the outside of the outer case 310 at the end of the guide slot 310a, the inner case 320 is prevented from further longitudinal movement in the direction indicated by arrow A. With the viewfinder in the protruding position, the fixing protrusion 322 is received in the second fixing slot 312b so that the inner case 320 is stopped from further longitudinal outward movement. The fixing protrusion 322 is in contact with the other end of the guide wall 311 such that the inner case 320 may not be moved easily in the retraction direction B. Accordingly, the inner case 320 is held in its projecting position for convenient use of the viewfinder 300.

If a user pushes the eyecup 350 in the retraction direction, indicated by arrow B, the fixing protrusion 322 is removed from the second fixing slot 312b and moved in contact with the inside of the guide wall 311 to be again received in the first fixing slot 312a.

The inner case 320, a guide slot 310a, the first and second fixing slots 312a, 312b and the guide wall 311 are preferably formed integrally with the outer case 310. The hook 321 and the fixing protrusion 322 are preferably formed integrally with the inner case 320 and, therefore, the structure of the viewfinder is simple. Accordingly, the image capturing apparatus that is simple to assemble and process and has low manufacturing costs is provided.

Finally, since the outer case 310 and the inner case 320 are made of the same material, abrasion by friction between the outer case 310 and the inner case 320 is substantially eliminated.

## Claims

1. An image capturing apparatus including a body (110) and a viewfinder (300) comprising first and second longitudinally, relatively moveable elements (310, 320), one within the other, **characterised in that** outer of said elements (310) is fixed to said body (110).

2. An apparatus according to claim 1, wherein the inner (320) of said elements has a projection (322) and the outer of said elements has first and second holes (312a, 312b), separated longitudinally and configured to receive the projection (322) to thereby define retracted and extended positions of the inner (320) of said elements.

3. An apparatus according to claim 2, wherein said projection (322) and/or a wall portion (311) of the outer (310) of said elements between said holes (312a, 312b) are elastically deflectable.

4. An apparatus according to claim 3, wherein the projection (322) is configured such that itself and/or said wall portion (311) are deflected when a longitudinal force is applied for moving the inner (320) of said members between said retracted and extended positions.

5. An apparatus according to any preceding claim, wherein the inner (320) of said elements has a protrusion (321) and the outer (310) of said elements has a slot (310a) receiving said protrusion (321), the slot (310a) and the protrusion (321) being dimensioned to prevent relative movement between said elements (310, 320) beyond their retracted and extended configurations.

6. An apparatus according to claim 5, wherein the protrusion (321) is elastically deflectable for insertion of the inner (320) of said elements into the outer (310) but configured to prevent such deflection when it reaches the extended position end of said slot (310a) during extension of the viewfinder (300).

7. A viewfinder connected to a main body of an image photographing apparatus, comprising:
a liquid crystal display device;
a lens;
an outer case attached to the main body; and
an inner case having the lens mounted therein, the inner case being movably mounted in the outer case,
wherein the outer case guides the movement of the inner case.

8. The viewfinder according to claim 7, wherein
first and second fixing grooves are formed in the outer case at a predetermined distance apart from each other; and
a fixing protrusion is connected to the inner case, the fixing groove substantially preventing movement of the inner case when the fixing groove is inserted in one of the first or second fixing grooves.

9. The viewfinder according to claim 8, wherein
the outer case has a guide wall the fixing protrusion being moved in contact with the inside of the guide wall when the inner case is moved.

10. The viewfinder according to claim 9, wherein
the outer case is integrally formed with the guide wall by molding.

11. The viewfinder according to claim 8, wherein
the inner case is integrally formed with the fixing protrusion by molding.

12. The viewfinder according to claim 7, wherein
the outer case has a guide groove having first and second ends; and
the inner case has a hook adapted to be received by the guide groove, the hook engaging the first and second ends of the guide groove during movement to prevent the inner case from separating from the outer case.

13. The viewfinder according to claim 12, wherein
the inner case is integrally formed with the hook by molding.

14. The viewfinder according to claim 7, wherein
the liquid crystal display device is secured to the inner case.

15. The viewfinder according to claim 7, wherein
a plurality of bosses extend from an outer surface of the outer case and are adapted to receive fasteners to secure the outer case to the main body.

16. The viewfinder according to claim 16, wherein
the plurality of the bosses are integrally formed with the outer case by molding.

17. The viewfinder according to claim 7, wherein
the inner and outer cases are made of substantially the same material to reduce friction therebetween.

18. An image photographing apparatus, comprising:
a viewfinder for photographing an image of a subject and recording the image on a recording media, the viewfinder including
a liquid crystal display device;
a lens;
an outer case attached to a main body of the image photographing apparatus; and
an inner case to which the lens is connected, the inner case being movably mounted in the outer case,
wherein the outer case guides movement of the inner case.

19. The image photographing apparatus according to claim 18, wherein
the outer case is securely attached to the image photographing apparatus main body by fasteners.

20. The image photographing apparatus according to claim 19, wherein
the fasteners are screws.

21. The image photographing apparatus according to claim 15, wherein
the outer case has a guide groove having first and second ends; and
the inner case has a hook adapted to be received by the guide groove, the hook engaging the first and second ends of the guide groove during movement to prevent the inner case from separating from the outer case.

22. The image photographing apparatus according to claim 21, wherein
when the hook is in the first end of the guide groove the viewfinder is in the inserted position, and when the hook is in the second end of the guide groove the viewfinder is in the protruded position.
